# EUROPÄISCHE PATENTSCHRIFT

(11) **EP 3 448 150 B1**
(45) Veröffentlichungstag und Bekanntmachung des Hinweises auf die Patenterteilung: **28.04.2021**
(21) Anmeldenummer: 17718475.1
(22) Anmeldetag: 31.03.2017
(51) Int. Cl.: A01N 1/02, G01K 3/04, G01K 11/06

(54) **VERFAHREN UND VORRICHTUNG ZUR TEMPERATURÜBERWACHUNG EINER KRYOKONSERVIERTEN BIOLOGISCHEN PROBE**
METHOD AND DEVICE FOR THE TEMPERATURE MONITORING OF A CRYOPRESERVED BIOLOGICAL SAMPLE
PROCÉDÉ ET DISPOSITIF DE SURVEILLANCE DE LA TEMPÉRATURE D'UN ÉCHANTILLON BIOLOGIQUE CRYOCONSERVÉ

(30) Priorität: 27.04.2016 DE 102016005133
(43) Veröffentlichungstag der Anmeldung: 06.03.2019
(73) Patentinhaber: Fraunhofer-Gesellschaft zur Förderung der angewandten Forschung e.V., 80686 München (DE)
(72) Erfinder: FUHR, Günter R., 13187 Berlin (DE); ZIMMERMANN, Heiko, 97295 Waldbrunn (DE)
(74) Vertreter: v. Bezold & Partner Patentanwälte - PartG mbB
(86) Internationale Anmeldenummer: PCT/EP2017/000403
(87) Internationale Veröffentlichungsnummer: WO 2017/186330

(56) Entgegenhaltungen:
- WO-A1-00/47964
- WO-A1-2007/085385
- DE-A1- 3 716 972
- FR-A1- 3 013 836
- US-A- 3 701 282
- US-A- 5 282 684
- US-A1- 2006 078 036

## Beschreibung

Die Erfindung betrifft ein Verfahren zur Temperaturüberwachung einer kryokonservierten biologischen Probe. Die Erfindung betrifft ferner eine Vorrichtung zur Temperaturüberwachung einer kryokonservierten biologischen Probe.

Die Tieftemperaturkonservierung (Kryokonservierung) von Zellen ist bisher die einzige Möglichkeit, Lebensprozesse auf zellulärer Ebene reversibel (vitalitätserhaltend) so anzuhalten, dass sie nach einer Erwärmung auf physiologische Temperaturen wieder anlaufen können. Die Kryokonservierung hat sich über große Biobanken in den letzten Jahrzehnten zu einem unverzichtbaren Element für Kliniken, Pharmaunternehmen, die Arterhaltung, den Umweltschutz und die Gesundheitsvorsorge entwickelt. Gelagert wird biologisches Material in tieftemperaturverträglichen Probenbehältern (Kryobehältern), z. B. Röhrchen, Straws und Beuteln, unterschiedlicher Größe. Bei der Kryokonservierung sind die gelagerten Biomaterialien unter Aufrechterhaltung der Vitalität des Probenmaterials gefroren, zumeist bei Temperaturen unterhalb -80 °C, für Lebendsammlungen unter -140 °C bis zur Temperatur des flüssigen Stickstoffs. Für eine kryokonservierte Probe oder eine für die Kryokonservierung vorgesehene Probe wird nachfolgend auch der Begriff "Kryoprobe" verwendet.

Für makroskopische Proben, wie z. B. Blut oder Gewebe, sind zahlreiche Techniken zur Probenlagerung bei tiefen Temperaturen entwickelt worden. In der modernen Medizin, Gentechnik und Biologie besteht die Tendenz, zunehmend kleine Proben einer Kryokonservierung zu unterziehen. Es werden beispielsweise kleine Suspensionsvolumina (Milliliter oder darunter) mit suspendierten Zellen oder Zellgruppen eingefroren. Die Kryokonservierung von Zellen aus In-vitro-Kulturen erfolgt in überwiegendem Maße in einer Suspension. Die meisten der biomedizinisch relevanten Zellen benötigen jedoch zu ihrer Vermehrung und geordneten Entwicklung einen Substratkontakt. Daher werden Proben ggf. nach einer Kultivierung im substratgebundenen Zustand eingefroren.

Die Qualität der Proben ist von ausschlaggebender Bedeutung, da sie für Zelltherapien in Kliniken, die Entwicklung von Pharmaka und biotechnologischen Produkten, als nationale Ressourcen und vieles mehr Anwendung finden. Die Lagerzeit liegt bei einigen Tagen bis zu Jahrzehnten, mit einer Tendenz zur Langzeitlagerung. Die Proben werden in gekühlten Behältern gelagert, befinden sich zumeist in Metalleinschüben und Racks, mit denen sie bei neuen Einlagerungen oder Entnahmen Temperaturschwankungen unterliegen. Bei Lebendablagen (Zellen, Zellsuspensionen und Gewebeteilen) spielt nicht nur die ununterbrochene Kühlkette eine entscheidende Rolle, sondern auch die Vermeidung großer Temperatursprünge in der Tiefkühlphase. Da es bei der Entnahme gar nicht so selten vorkommt, dass Kryobehälter sich auf Temperaturen von -80 °C bis -20 °C erwärmen, treten, obwohl sie noch gefroren sind, Qualitätsminderungen unerkannt auf, die nicht nur den Wert der Probe mindern, sondern auch bei ihrer Verwendung im klinischen Bereich zu lebensgefährlichen Situationen führen können. Selbst kurzzeitig aufgetauten Proben sieht man im wiedergefrorenen Zustand nicht an, dass sie dem Originalzustand nicht mehr entsprechen. Es geht aber vornehmlich nicht nur darum, ein Auftauen der Biomaterialien zu erkennen, sondern das Überschreiten einer Grenztemperatur im Bereich zwischen -140 °C und -20 °C zu dokumentieren. Eine Temperaturkontrolle und -dokumentation für jede Probe ist die Forderung und bislang nur selten - und wenn, dann mit hohem technischen Aufwand - zu erfüllen. Hinzu kommen umfangreiche Laboruntersuchungen nach dem Auftauen, die ebenfalls wertvolles Probenmaterial verbrauchen und selbst im Falle inzwischen wertlos gewordener Kryoproben Kosten erzeugen.

US 3701282 und US 2006/0078036 A1 offenbaren Vorrichtungen, die die Merkmale des Oberbegriffs des Anspruchs 1 umfassen. WO 2007/085385 A1 offenbart ein Deckelteil, das in einem Stapel von Probenträgern für die Kryokonservierung einen Abschluss oder ein Zwischenstück bilden kann. Das Deckelteil kann ein Kontrollelement umfassen, das eine Erwärmung durch eine Strukturänderung (z.B. Schmelzen einer gefrorenen Eiskugel) anzeigt.

Es ist somit eine Aufgabe der Erfindung, ein verbessertes Verfahren zur Temperaturüberwachung einer kryokonservierten biologischen Probe bereitzustellen, mit dem Nachteile herkömmlicher Techniken vermieden werden können und das sich durch eine vereinfachte Verfahrensführung auszeichnet. Eine weitere Aufgabe ist es, eine Vorrichtung zur Temperaturüberwachung einer kryokonservierten biologischen Probe bereitzustellen, mit der Nachteile herkömmlicher Techniken vermieden werden können.

Eine weitere Aufgabe ist es, eine Möglichkeit bereitzustellen, um an einem möglichst einfachen Marker oder Kennzeichen erkennen zu können, ob eine Kryoprobe sich über eine definierbare Grenztemperatur, und wenn auch nur kurzzeitig, erwärmt hat. Die Grenztemperatur muss im Bereich zwischen -20°C und -140 °C vor dem Einfrieren festlegbar sein. Dies sollte an jeder einzelnen Kryoprobe und an damit Millionen von Proben rasch und leicht erkennbar möglich sein, darf die Biomaterialien nicht verändern und sollte bereits im tiefgefrorenen Zustand erfolgen. Wenn möglich, sollte der Zustand der Probe auch im Lagerbehälter erfassbar sein, da jede Aus- und Einlagerung die Gefahr der Probenveränderung einer Vielzahl von Proben im Lagergut mit sich bringt, da in der Regel ganze Racks aufgezogen werden. Die Vorrichtung bzw. das Verfahren sollte leicht handhabbar, tieftemperaturtolerant und einstellbar sein. Es darf nur wenig oder keine Energie verbrauchen und möglichst nur geringste Kosten verursachen, da die Lagerung einer Bioprobe im gekühlten Zustand in ihren Gesamtaufwendungen nur wenige Euros kosten sollte. Diesem Anspruch müssen auch die einsetzbaren Materialien gerecht werden.

Diese Aufgaben werden durch Vorrichtungen und Verfahren mit den Merkmalen der unabhängigen Ansprüche gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Gemäß einem ersten Gesichtspunkt der Erfindung werden die genannten Aufgaben durch ein Verfahren zur Temperaturüberwachung einer kryokonservierten biologischen Probe gelöst. Zur Durchführung des Verfahrens wird eine Vorrichtung zur Temperaturüberwachung einer kryokonservierten biologischen Probe bereitgestellt.

Gemäß einem zweiten Gesichtspunkt der Erfindung ist die Vorrichtung zur Temperaturüberwachung einer kryokonservierten biologischen Probe als Gegenstand per se offenbart und beansprucht. Die Ausführungen betreffend die Vorrichtung, insbesondere deren vorteilhafte Ausführungsvarianten, sollen somit zur Vermeidung von Wiederholungen als rein vorrichtungsgemäß offenbart und als verfahrensgemäß offenbart gelten.

Die Vorrichtung zur Temperaturüberwachung einer kryokonservierten biologischen Probe umfasst einen Probenbehälter mit einem Aufnahmeraum (Probenreservoir) zur Aufnahme einer Probe, insbesondere einer biologischen Probe. Der Aufnahmehohlraum kann eine kryokonservierte Probe enthalten.

Die Vorrichtung umfasst ferner mindestens eine Kammer, deren Innenraum mit dem Aufnahmeraum nicht fluidisch verbunden ist, so dass die Indikatorsubstanz nicht in direkten Kontakt mit einer im Aufnahmeraum befindlichen Probe treten kann. Die Kammer ist ferner lediglich zum Teil mit einer Indikatorsubstanz, deren Schmelztemperatur bei Normaldruck, also bei 1013,25 mbar, in einem Bereich von -20 °C bis -140 °C liegt, gefüllt. Die Schmelztemperatur kann vorzugsweise auch in einem Bereich von -20 °C bis -100 °C liegen.

Durch die Kammer der erfindungsgemäßen Vorrichtung wird ein Zusatzkompartiment bereitgestellt, das durch die partielle Füllung mit der Indikatorsubstanz als Indikatorelement verwendet werden kann, um eine unerwünschte Überschreitung der Grenztemperatur anzuzeigen.

Die erfindungsgemäße Vorrichtung weist außerdem die Merkmale einer der Varianten i), ii) oder iii) des Anspruchs 1 auf.

Der Probenbehälter ist ein für eine Kryokonservierung geeigneter Behälter, beispielsweise ein Röhrchen, ein Straw (auch als Samenröhrchen bezeichnet), ein Beutel zur Blut- oder Stammzellenlagerung, eine Box oder ein anderer für eine Kryokonservierung geeigneter Behälter. Derartige Behälter werden entsprechend auch als Kryoröhrchen, Kryostraw, Kryobeutel, Kryobox oder allgemein als Kryobehälter bezeichnet.

Kryoröhrchen (engl. cryogenic tubes) werden auch als Biobank- oder Kryobankröhrchen bezeichnet. Kryoröhrchen weisen einen Aufnahmeraum auf, der einen inneren Hohlraum zur Aufnahme einer biologischen Probe ausbildet. Das Kryoröhrchen weist ferner üblicherweise einen Deckel zum Verschließen des Aufnahmeraums auf. Der Deckel kann einen Eingriff aufweisen, über den der Deckel mit einem Werkzeug gedreht werden kann. Das Kryoröhrchen kann auch ein Bodenelement aufweisen, das eine Kennung, z. B. in Form eines maschinenlesbaren Codes, aufweist.

Das Verfahren umfasst ferner das Einfrieren der Indikatorsubstanz, wobei die Kammer zum Einfrieren der Indikatorsubstanz in eine erste Lage gebracht wird, so dass die Indikatorsubstanz im flüssigen Zustand in ein erstes Teilvolumen der Kammer fließt und dort gefriert. Danach, insbesondere vor und während der Überwachungsphase der Kryolagerung, wird die Kammer mit der gefrorenen Indikatorsubstanz in eine zweite Lage gebracht, in der ein Schmelzen der Indikatorsubstanz durch den Einfluss der Schwerkraft zu einer zumindest teilweisen Konfigurationsänderung der Indikatorsubstanz in der Kammer führt.

Die Konfigurationsänderung kann eine zumindest teilweise Veränderung der Lage der Indikatorsubstanz und/oder der Form der Indikatorsubstanz, z. B. der Oberflächenform, sein. Schmilzt die Indikatorsubstanz in der zweiten Lage, wird sie unter dem Einfluss der Schwerkraft in ein zweites Teilvolumen fließen und dort wieder gefrieren, falls die Temperatur wieder unter den Schmelzpunkt fällt.

Mit anderen Worten wird die Indikatorsubstanz in einer solchem Geometrie oder Lage eingefroren und die Kammer in ihrer Lage im tiefgefrorenen Zustand, z. B. bei der Lagertemperatur oder zumindest unterhalb der festgelegten Grenztemperatur bzw. Schmelztemperatur der Indikatorsubstanz, verändert, so dass ein Schmelzen der Indikatorsubstanz nach der Lageveränderung zu einer sichtbaren Verlagerung der Flüssigkeit oder ihrer Begrenzungsgeometrie führt. An dieser Veränderung der Flüssigkeit, die z.B. gefärbt oder anderweitig gut erkennbar gemacht werden kann, kann sofort durch Anschauen oder auch technisch automatisiert festgestellt werden, ob die Grenztemperatur überschritten wurde.

Gemäß dem Verfahren besteht nun die Möglichkeit, die Vorrichtung, aufweisend den Probenbehälter mit einer kryokonservierten Probe und die mindestens eine Kammer mit der gefrorenen Indikatorsubstanz, zur Kryokonservierung zu lagern, wobei die mindestens eine Kammer zur Temperaturüberwachung in der zweiten Lage am Probenbehälter angeordnet ist.

Zu einem späteren Zeitpunkt kann geprüft werden, ob eine Konfigurationsänderung der gefrorenen Indikatorsubstanz, z. B. eine zumindest teilweise Verlagerung und/oder eine Formänderung der Indikatorsubstanz, stattgefunden hat.

Ist dies der Fall, kann auf ein Überschreiten der Schmelztemperatur der Indikatorsubstanz und somit der zu überwachenden Grenztemperatur geschlossenen werden, insbesondere auch dann, wenn die Überschreitung nur kurzzeitig aufgetreten ist.

Ein besonderer Vorzug der Erfindung liegt somit darin, dass eine Konfigurationsänderung der Indikatorsubstanz direkt anzeigt, ob eine Kryoprobe sich über eine definierbare Grenztemperatur, und wenn auch nur kurzzeitig, erwärmt hat. Dies kann durch visuelle Sichtprüfung oder auch technisch automatisiert mittels einer entsprechend eingerichteten Messeinrichtung schnell und einfach festgestellt werden, ohne dass die Probe aus dem Probenbehälter entnommen oder aufgetaut werden muss.

Gemäß einer besonders bevorzugten Ausführungsform kann die Vorrichtung eine Mehrzahl von Kammern aufweisen, die jeweils lediglich zum Teil mit einer Indikatorsubstanz, deren Schmelztemperatur in einem Bereich von -20 °C bis -140 °C liegt, gefüllt sind, wobei die Indikatorsubstanzen in den Kammern unterschiedliche Schmelztemperaturen aufweisen. Damit können unterschiedliche Temperaturgrenzwerte überwacht werden, wobei jede Indikatorsubstanz so ausgewählt und/oder deren Mischungsverhältnis so eingestellt ist, dass ihr Schmelzpunkt einem der zu überwachenden Temperaturgrenzwerte entspricht. Diese Ausführungsform bietet den Vorteil, dass sich die erreichten Temperaturintervalle, in die die Probe gelangt ist, genauer eingrenzen lassen.

Ferner kann eine Kammerwandung an mindestens einer Stelle transparent oder semi-transparent sein, so dass von außen sichtbar ist, ob eine Konfigurationsänderung, z. B. eine Lageänderung, der Indikatorsubstanz erfolgt ist. Vorzugsweise ist die gesamte Kammerwandung transparent oder semi-transparent ausgeführt.

Zur besseren Erkennbarkeit kann die Indikatorsubstanz einen Indikatorzusatz enthalten, der eine Detektierbarkeit einer physikalischen Eigenschaft der Indikatorsubstanz erhöht. Der Indikatorzusatz kann beispielsweise ein Farbstoff sein, so dass die Indikatorsubstanz farbig oder gefärbt, d. h. nicht transparent, ist und so deren Form und/oder Lage besser optisch erkennbar ist.

Als Farbstoff kommt grundsätzlich jeder Farbstoff in Frage, welcher mindestens die folgenden Bedingungen erfüllt:
- intensives Färbevermögen auch in kleinen Mengen und Konzentrationen (z. B. ausgehend von einer gesättigten Farblösung Zugabe im Bereich < 1 Volumen-%, in der Regel im Promille- oder Subpromille-Bereich).
- frosttolerant
- lichtecht bei den Versand- als auch den relevanten tiefen Temperaturen
- löslich in allen Bestandteilen der Indikatorsubstanz
- kein Entmischen beim Einfrieren
- keine Reaktion mit Kunststoffmaterialien, welche in Kontakt mit der Indikatorsubstanz kommen.

Vorzugsweise ist der Farbstoff aus der Gruppe ausgewählt, welche Triphenylmethanfarbstoffe, Rhodaminfarbstoffe, insbesondere Xanthene, Azofarbstoffe sowie Phenazin- und Phenothiazinfarbstoffe umfasst.

In spezielleren Ausführungsformen ist der Farbstoff aus der Gruppe ausgewählt, welche Oil Red, Methylrot, Brillantgrün, Rhodamin B, Neutralrot, Methylenblau oder andere Farbstoffe, die zur Anfärbung von Zellen in der Zytologie verwendet werden, umfasst.

Der Indikatorzusatz können Partikel, insbesondere Nanopartikel sein, die eine Streuwirkung und/oder Polarisationswirkung der Indikatorsubstanz für auf die Indikatorsubstanz auftreffende elektromagnetische Strahlung erhöhen. Dadurch kann eine Konfigurationsänderung der Indikatorsubstanz mittels einer optischen Transmissionsmessung, Streumessung und/oder Polarisationsmessung zuverlässiger detektiert werden. Der Indikatorzusatz können leitfähige Partikel sein. Durch Beimischen von leitfähigen Partikel kann die Leitfähigkeit oder Impedanz der Indikatorsubstanz beeinflusst werden. Auf diese Weise kann eine Konfigurationsänderung der Indikatorsubstanz mittels einer Leitfähigkeitsmessung oder Impendanzmessung detektiert werden.

Gemäß einer bevorzugten Ausführungsform kann die Vorrichtung eine Messeinrichtung aufweisen, die ausgebildet ist, eine Lage der Indikatorsubstanz in der Kammer zu erfassen. Die Messeinrichtung kann eine optische oder optisch-elektrische Messeinrichtung sein, um z. B. mit einer optischen Transmissions-, Streulicht- oder Reflektionsmessung eine Konfigurationsänderung der Indikatorsubstanz festzustellen.

Als Indikatorsubstanz kann eine Substanz ausgewählt werden, deren Schmelztemperatur einer vorbestimmten Grenztemperatur, deren Überschreiten überwacht werden soll, entspricht. Die Indikatorsubstanz ist eine Flüssigkeit oder eine Mischung verschiedener Flüssigkeiten, deren Schmelzpunkt der gewünschten Grenztemperatur entspricht. Lediglich beispielhaft kann als Indikatorsubstanz eine Mischung aus Wasser (H₂0) und Ethanol (C₂H₆0), eine Mischung aus Wasser (H₂0) und Kaliumhydroxid (KOH) oder eine Mischung aus Wasser und einem Gefrierschutzmittel gewählt werden. Das Mischungsverhältnis wird dabei gemäß dem jeweiligen Schmelzdiagramm, das den Verlauf des Schmelzpunktes in Abhängigkeit vom Mischungsverhältnis angibt, so eingestellt, dass der Schmelzpunkt des Flüssigkeitsgemisches den gewünschten Wert, nämlich die zu überwachende Grenztemperatur, aufweist.

In einer bevorzugten Ausführungsform umfasst die Indikatorsubstanz mindestens einen Alkohol, welcher aus der Gruppe, die Octan-1-ol, Nonan-1-ol, Propan-1,2-diol, Propan-1,3-diol, Butan-1,2-diol, Butan-1,3-diol, Butan-2-ol, Pentan-1,5-diol, Pentan-1-ol, Cyclopentanol, Benzylalkohol umfasst, ausgewählt ist. Besonders bevorzugt ist der mindestens eine Alkohol aus Propan-1,3-diol, Propan-1,2-diol und Butan-2-ol ausgewählt.

In einer anderen bevorzugten Ausführungsform umfasst die Indikatorsubstanz mindestens zwei verschiedene Alkoholkomponenten:
a) einen Alkohol, ausgewählt aus der Gruppe, die Octan-1-ol, Nonan-1-ol, Propan-1,2-diol, Propan-1,3-diol, Butan-1,2-diol, Butan-1,3-diol, Butan-2-ol, Pentan-1,5-diol, Pentan-1-ol, Cyclopentanol, Benzylalkohol umfasst;
b) einen Alkohol, ausgewählt aus der Gruppe, die Octan-1-ol, Nonan-l-ol, Propan-1,2-diol, Propan-1,3-diol, Butan-1,2-diol, Butan-1,3-diol, Butan-2-ol, Pentan-1,5-diol, Pentan-l-ol, Cyclopentanol, Benzylalkohol umfasst, mit einem niedrigeren Schmelzpunkt als der Alkohol der Komponente a);
wobei das Mischungsverhältnis der Komponenten a) und b) so eingestellt ist, dass die Schmelztemperatur der Mischung innerhalb eines Temperaturbereichs von -20 °C bis -160 °C, insbesondere von -25 °C bis -160 °C oder -50 °C bis -150 °C, liegt.

Speziellere Ausführungsformen sind dadurch gekennzeichnet, dass die Indikatorsubstanz eine der folgenden Kombinationen der Komponenten a) und b) umfasst:
- Octan-1-ol und Butan-2-ol in einem Mischungsverhältnis von 5 bis 95 Vol.-%;
- Octan-1-ol und Pentan-1-ol in einem Mischungsverhältnis von 5 bis 95 Vol.-%;
- Octan-1-ol und Propan-1,2-diol in einem Mischungsverhältnis von 5 bis 95 Vol.-%;
- Nonan-1-ol und Butan-2-ol in einem Mischungsverhältnis von 5 bis 95 Vol.-%;
- Nonan-1-ol und Propan-1,2-diol in einem Mischungsverhältnis von 5 bis 95 Vol.-%;
- Nonan-1-ol und Pentan-1-ol in einem Mischungsverhältnis von 5 bis 95 Vol.-%;
- Propan-1,2-diol und Butan-2-ol in einem Mischungsverhältnis von 5 bis 95 Vol.-%;
- Propan-1,2-diol und Propan-1,3-diol in einem Mischungsverhältnis von 5 bis 95 Vol.-%;
- Propan-1,2-diol und Butan-1,2-diol in einem Mischungsverhältnis von 5 bis 95 Vol.-%;
- Propan-1,3-diol und Butan-2-ol in einem Mischungsverhältnis von 5 bis 95 Vol.-%;
- Propan-1,3-diol und Butan-1,2-diol in einem Mischungsverhältnis von 5 bis 95 Vol.-%;
- Pentan-1,5-diol und Butan-2-ol in einem Mischungsverhältnis von 5 bis 95 Vol.-%;
- Benzylalkohol und Butan-2-ol in einem Mischungsverhältnis von 5 bis 95 Vol.-%;
- Pentan-1-ol und Butan-2-ol in einem Mischungsverhältnis von 5 bis 95 Vol.-%;
- Pentan-1-ol und Methanol in einem Mischungsverhältnis von 5 bis 95 Vol.-%;
- Cyclopentanol und Butan-2-ol in einem Mischungsverhältnis von 5 bis 95 Vol.-%;
- Cyclopentanol und Propan-1,2-diol in einem Mischungsverhältnis von 5 bis 95 Vol.-%;
- Cyclopentanol und Pentan-1-ol in einem Mischungsverhältnis von 5 bis 95 Vol.-%;
- Cyclopentanol und Butan-1,2-diol in einem Mischungsverhältnis von 5 bis 95 Vol.-%; wobei der angegebene Wert des Mischungsverhältnisses sich jeweils auf den Anteil der erstgenannten Komponente in der Mischung aus beiden Komponenten bezieht.

In besonders bevorzugten Ausführungsformen umfasst diese Indikatormischung beispielsweise Propan-1,2-diol und Butan-2-ol in einem Mischungsverhältnis von 40 bis 60 Vol.-% (ergibt eine Schmelztemperatur von ca. - 90 °C), Propan-1,2-diol und Propan-1,3-diol in einem Mischungsverhältnis von 30 bis 70 Vol.-%, oder Propan-1,3-diol und Butan-2-ol in einem Mischungsverhältnis von 30 bis 70 Vol.-%.

Vorzugsweise umfasst die Indikatorsubstanz neben dem mindestens einen Alkohol noch mindestens einen Farbstoff wie oben beschrieben. Besonders bevorzugt ist dieser Farbstoff aus der Gruppe ausgewählt, welche Oil Red, Methylrot, Brillantgrün und Rhodamin B umfasst.

Eine noch speziellere Ausführungsform ist dadurch gekennzeichnet, dass die Indikatorsubstanz zwei Alkohole a) und b), die aus Propan-1,3-diol, Propan-1,2-diol und Butan-2-ol ausgewählt sind, vorzugsweise in einem Mischungsverhältnis wie oben angegeben, sowie einen Farbstoff, der aus Gruppe ausgewählt ist, welche aus Oil Red, Methylrot, Brillantgrün und Rhodamin B besteht, umfasst.

Die Konzentration des Farbstoffs in der Alkoholkomponente kann je nach Farbstoff und Alkohol stark variieren.

In der Regel soll die Konzentration bei intensiver Färbung so niedrig wie möglich gehalten werden, damit die Farbmoleküle das Gefrier- und Schmelzverhalten der Alkohole, in denen sie gelöst werden, nicht verändern oder deren Viskosität erhöhen. Die Farbstoffkonzentration liegt dabei typischerweise in einem Bereich von < 10 Volumen-%, insbesondere < 1 % oder < 0,1 %, also im Prozent- oder Promille- bzw. Subpromillebereich.

In einer Variante der vorliegenden Erfindung entspricht die zu überwachende Grenztemperatur nicht direkt der Schmelztemperatur der Indikatorsubstanz, sondern vielmehr derjenigen Temperatur oberhalb der Schmelztemperatur, bei der die Viskosität der geschmolzenen Substanz soweit abgenommen hat, dass der erforderliche Flüssigkeitstransport stattfinden kann.

Diese Temperatur wird hier auch als Schwellentemperatur bezeichnet und liegt typischerweise in einem Temperaturbereich von 3-30 °C oder 5-30°C, beispielsweise 3-10 °C, 3-20 °C, 5-10 °C oder 5-20 °C, oberhalb der nominellen Schmelztemperatur.

In einer vorteilhaften Ausführungsform ist die Indikatorsubstanz daher dadurch gekennzeichnet, dass die flüssige Mischung in einem Temperaturbereich von 3-30 °C oder 5-30 °C oberhalb der Schmelztemperatur eine Viskosität in einem Bereich von 10 bis 10⁶ mPa*s, vorzugsweise 10 bis 10⁴ mPa*s, aufweist.

Die mindestens eine Kammer der Vorrichtung kann durch einen Behälter mit einem oder mehreren Hohlräumen gebildet sein, der außen am Probenbehälter anordenbar und/oder angeordnet ist. Der Begriff "anordenbar und/oder angeordnet" soll umfassen "befestigbar und/oder befestigt", "koppelbar und/oder gekoppelt", "verbindbar und/oder verbunden". Der Behälter zur Ausbildung der mindestens einen partiell mit Indikatorsubstanz gefüllten Kammer ist somit von dem Probenbehälter zu unterscheiden.

Eine Möglichkeit der Realisierung sieht vor, dass der Behälter zur Ausbildung der mindestens einen Kammer lösbar am Probenbehälter befestigt ist. Unter einer lösbaren Befestigung soll insbesondere auch ein Aufschieben, oder Aufstecken des Behälters am Probenbehälter umfasst sein. Dies bietet den Vorteil, dass der Behälter räumlich getrennt vom Probenbehälter gelagert und vorbereitet (z. B. Gefrieren der Indikatorsubstanz in der ersten Lage) werden kann.

Gemäß einer erfindungsgemäßen Ausführungsform kann die mindestens eine Kammer durch einen Behälter mit einem oder mehreren Hohlräumen gebildet sein, der verschwenkbar am Probenbehälter befestigt ist. Die Verschwenkbarkeit bietet den Vorteil, dass der Behälter direkt am Probenbehälter in zwei unterschiedliche Lagen bringbar ist, um die Indikatorsubstanz in einer ersten Lage zu gefrieren und anschließend in der zweiten Lage zur Temperaturüberwachung zu lagern.

Gemäß einer vorteilhaften Variante dieser Ausführungsform ist der Behälter an einem Längsende des Probenbehälters verschwenkbar befestigt. Dies ermöglicht eine vorteilhafte Nutzung des Raumangebots, insbesondere bei der Lagerung einer Vielzahl solcher Probenbehälter in Kryobanken.

Ein besonders einfach handhabbarer und kostengünstiger Verschwenkmechanismus kann bereitgestellt werden, wenn der Behälter durch ein verbiegbares Teil verschwenkbar am Probenbehälter befestigt ist.

Der Probenbehälter kann einen Deckel zum Verschließen des Aufnahmeraums aufweisen, z. B. um eine Kontamination der im Aufnahmeraum gelagerten Bioprobe zu verhindern. Im Rahmen der Erfindung besteht die Möglichkeit, den Behälter zur Ausbildung der mindestens einen Kammer verschwenkbar am Deckel des Probenbehälters zu befestigen. Dies bietet einerseits den Vorzug, dass nur die Deckel herkömmlicher Kryobehälter zur Aufnahme des Behälters mit der Indikatorsubstanz zweckmäßig angepasst werden müssen, und andererseits den Vorzug, dass die Beschickung des Probenbehälters mit einer Bioprobe räumlich und zeitlich getrennt von dem Gefrieren der Indikatorsubstanz(en) im Behälter und dem Anbringen des Behälters am Deckel des Probenbehälters erfolgen kann.

Zur möglichst platzsparenden Anordnung des Behälters am Probenbehälter kann der Behälter gemäß einer weiteren Variante um eine Drehachse, die senkrecht zu einer Längsachse des Probenbehälters ist, verschwenkbar am Probenbehälters befestigt sein.

Der verschwenkbar am Probenbehälters befestigte Behälter zur Ausbildung der mindestens einen Kammer kann beispielsweise als halbringförmiger oder ringförmiger Hohlkörper ausgeführt sein und in eine erste Schwenkstellung, in der er koaxial zu einer Längsachse des Probenbehälters angeordnet ist, und in eine um mindestens 45°, vorzugsweise um 90°, gegenüber der ersten Schwenkstellung gedrehte zweite Schwenkstellung bringbar sein. Die erste Schwenkstellung kann eine Horizontalstellung sein. Die zweite Schwenkstellung kann eine Vertikalstellung sein. Diese Variante ist besonders vorteilhaft bei zylinderförmigen Probenbehältern, wie z. B. einem Kryoröhrchen, wenn der Behälter an einem Längsende des Probenbehälters schwenkbar befestigt ist. Eine besonders kompakte Ausführung der Vorrichtung kann realisiert werden, wenn ein Durchmesser des halbringförmig oder ringförmig ausgeführten Behälters dem Durchmesser des zylinderförmigen Probenbehälters entspricht, da die Mantelflächen von Probenbehälter und Behälter in der ersten Schwenkstellung koaxial und fluchtend zueinander positioniert werden können.

Die Begriffe "ringförmig" oder "halbringförmig" sollen insbesondere auch flache Ringformen oder flache Halbringformen umfassen, d. h. Ringformen und Halbringformen mit unteren und oberen Planseiten. Gemäß einer weiteren Ausführungsvariante kann eine Seite des halbringförmigen oder ringförmigen Behälters an ihrer Innenseite verspiegelt sein. Dies ermöglicht eine einfache Erfassung einer Lageveränderung der Indikatorsubstanz mithilfe eines Messstrahls einer Messeinrichtung. So kann beispielsweise der Messstrahl so auf den Innenraum des transparenten oder semi-transparenten Behälters gerichtet werden, dass der Messstrahl nur dann auf eine verspiegelte Innenfläche trifft und dadurch reflektiert wird, wenn die Indikatorsubstanz aufgrund eines Schmelzvorgangs ihre Lage verändert hat. Hat die Indikatorsubstanz ihre Lage nicht verändert, wird der Messstrahl dagegen von der Indikatorsubstanz absorbiert.

Der verschwenkbar am Probenbehälters befestigte Behälter zur Ausbildung der mindestens einen Kammer kann ferner ein länglicher Hohlkörper sein, z. B. in Form eines Röhrchens, der an einem Längsende des Probenbehälters mittelbar oder unmittelbar am Probenbehälter verschwenkbar befestigt ist.

Ferner kann die verschwenkbare Befestigung des Behälters am Probenbehälter so ausgeführt sein, dass der Behälter in eine erste Schwenkstellung bringbar ist, in der eine Längsachse des Behälters parallel zu einer Längsachse des Probenbehälters verläuft, und in eine zweite Schwenkstellung bringbar ist, die im Vergleich zur ersten Schwenkstellung um mindestens 45° gedreht ist. Diese Ausführungsvariante eignet sich besonders für eine optische Detektion der Lage und/oder Form der Indikatorsubstanz in dem Behälter. Vorstehend wurde bereits erwähnt, dass der die Indikatorsubstanz(en) enthaltene Behälter auch lösbar am Probenbehälter befestigt sein kann. Eine mögliche erfindungsgemäße Ausführungsform hierfür sieht vor, den Behälter bzw. die mindestens eine Kammer als ein doppelwandiges Aufsteckteil auszuführen. Dies ermöglicht ein schnelles Anbringen an einem Probenbehälter, der in üblicher Weise ausgeführt sein kann. Ferner kann das Aufsteckteil am Probenbehälter aufgeklebt sein.

Gemäß einer ersten Variante dieser Ausführungsform kann das doppelwandige Aufsteckteil eine doppelwandige Kappe sein, die an einem Längsende des Probenbehälters auf diesen aufsteckbar ist. Diese Variante ermöglicht ferner eine schnelle Sichtprüfung auf eine Form- oder Lageveränderung der Indikatorsubstanz, ohne dass der Probenbehälter aus seiner Lagerhaltung entnommen werden muss.

Gemäß einer zweiten Variante ist das doppelwandige Aufsteckteil auf eine äußere Mantelfläche des Probenbehälters aufsteckbar oder aufschiebbar und umgreift diese im aufgesteckten Zustand dabei zumindest teilweise. Diese Variante ist besonders vorteilhaft für zylinderförmige Probenbehälter, insbesondere Kryoröhrchen. Das doppelwandige Aufsteckteil kann dabei als Hohlzylinder oder Teil-Hohlzylinder ausgeführt sein, dessen Innendurchmesser dem Außendurchmesser des Probenbehälters entspricht, so dass das Aufsteckteil den zylinderförmigen Probenbehälter manschettenartig oder schellenartig umgreift.

Gemäß einer weiteren Ausführungsform der Erfindung kann die mindestens eine Kammer in den Probenbehälter selbst integriert sein, d. h., der Probenbehälter selbst kann in seinem Innern eine solche Kammer oder mehrere aufweisen. Dadurch kann auf ein separates außen am Probenbehälter angeordnetes Bauteil zur Ausbildung der mindestens einen Kammer verzichtet werden. Erfindungsgemäß kann der Aufnahmeraum des Probenbehälters zur Ausbildung der mindestens einen Kammer doppelwandig mit einer Innenwandung und einer Außenwandung ausgeführt sein, wobei ein Zwischenraum zwischen der Innenwandung und der Außenwandung zum Teil mit der Indikatorsubstanz gefüllt ist. Zur Ausbildung mehrerer Kammern kann der Zwischenraum durch Trennwände in Teilräume unterteilt sein.

Mit dem Begriff Probenbehälter wird insbesondere ein für eine Kryokonservierung ausgelegter Behälter bezeichnet. Der Probenbehälter ist vorzugsweise unter Verwendung tieftemperaturverträglichen Kunststoffmaterials für Temperaturen unter-140°C hergestellt. Das Kunststoffmaterial kann ohne Veränderung und ohne Schaden wiederholte Temperaturwechsel tolerieren. Es wird vorzugsweise ein Kunststoffmaterial verwendet, dessen Wasseraufnahmefähigkeit < 1 % der Eigenmasse, insbesondere < 0.1 % der Eigenmasse beträgt. Erfindungsgemäße Kryospeicherelemente basieren beispielsweise auf Polyurethan oder Polyethylen.

Mit dem Begriff "biologische Probe" wird biologisches Material wie Zellen, Gewebe, Zellbestandteile, biologische Makromoleküle etc. bezeichnet, welches im Probenbehälter der Kryokonservierung unterzogen wird - ggf. in einer Suspension und/oder im Verbund mit einem Substratmaterial. Im Aufnahmeraum kann somit ein Substrat angeordnet sein, das zur adhärenten Aufnahme biologischer Zellen, die Teil der biologischen Probe sind, eingerichtet ist.

Die zuvor beschriebenen bevorzugten Ausführungsformen und Merkmale sind miteinander kombinierbar. Weitere Einzelheiten und Vorteile der Erfindung werden im Folgenden unter Bezug auf die beigefügten Zeichnungen beschrieben. Es zeigen:
- FIG. 1-6: schematische Ansichten verschiedener Ausführungsbeispiele eine Vorrichtung zur Temperaturüberwachung einer kryokonservierten biologischen Probe;
- FIG. 7: ein Ablaufdiagramm zur Illustration eines Ausführungsbeispiels eines Verfahrens zur Temperaturüberwachung einer kryokonservierten biologischen Probe;
- FIG. 8A, 8B, 9A: jeweils ein Schmelzdiagramm eines Flüssigkeitsgemisches;
- FIG. 9B: eine Tabelle mit Schmelzpunkten einiger reiner Flüssigkeiten; und
- FIG. 10: eine Mischbarkeitsmatrix von Lösemitteln.

Gleiche oder funktional äquivalente Elemente sind in allen Figuren mit denselben Bezugszeichen bezeichnet und werden zum Teil nicht gesondert beschrieben.

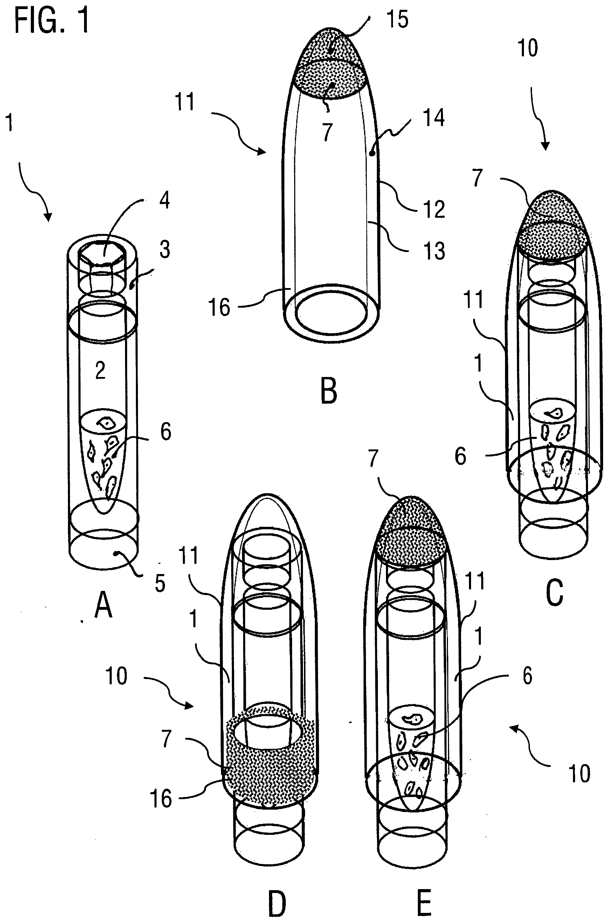

Figur 1A zeigt einen Probenbehälter in Form eines typischen Kryoröhrchens (Tube) 1, wie es in Kryobiobanken verwendet wird. Es umfasst in der Regel ein Aufnahmevolumen 2 für die Bioprobe, in dem sich die Biomaterialien befinden. Die Bioprobe ist hier eine Zellsuspension 6. Das Kryoröhrchen umfasst ferner einen Deckel 3, der das Gefäß verschließt und oben einen Eingriff 4 besitzt, über den der Deckel 3 mit einem Werkzeug (nicht gezeigt) im Fall der Automatisierung gedreht werden kann. Diese Kryoröhrchen 1 können auch einen Boden 5 enthalten, in den optional ein Barcodeviereck oder eine andere Kennung eingefügt ist. In dieser Form, zumeist senkrecht in Aufnahmen stehend, werden die Kryoröhrchen 1 in den Tieftemperaturbehältern gelagert.

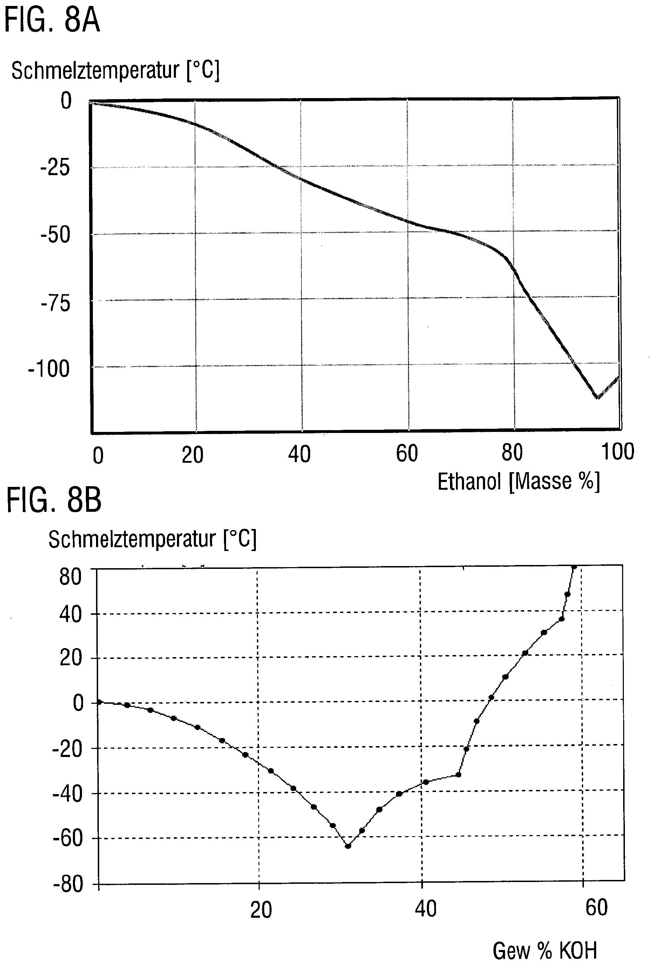

Gemäß der in Figur 1 gezeigten Ausführungsform wird auf das Kryoröhrchen 1 eine-doppelwandige durchsichtige Kappe 11 im tiefgekühlten Zustand aufgesetzt. Die Kappe 11 ist in Figur 1B dargestellt. Die doppelwandige Kappe 11 hat eine Innenwandung 13 und eine Außenwandung 12. Das Wandungsvolumen bzw. der Zwischenraum 14 zwischen den Innenwandung 13 und Außenwandung 12 ist zum Teil mit einer Indikatorsubstanz 7 in Form einer Flüssigkeit oder einer Flüssigkeitsmischung befüllt, deren Gefrierpunkt/Schmelzpunkt im Bereich von -20 °C bis -100 °C über das Mischungsverhältnis gewählt ist. Dies wird nachfolgend noch anhand der Figuren 8 bis 10 näher erläutert.

Die Kappe 11 wird in einer ersten Lage, die 180° gedreht zu der in Figur 1B gezeigten Drehposition der Kappe 11 ist, unter diese Schmelztemperatur abgekühlt, so dass die Flüssigkeit unter Einfluss der Schwerkraft innerhalb des Zwischenraums 14 in die Kappenspitze 15 läuft und dort gefriert. Nun kann die Kappe 11 umgedreht werden und zeigt das in Figur 1B dargestellte Bild. Die Indikatorsubstanz 7 ist in der Kappenspitze 15 festgefroren.

Bei einer Temperatur unter dem Gefrierpunkt/Schmelzpunkt der Indikatorsubstanz 7 wird die Kappe 11 dann wie in Figur 1C gezeigt auf das Kryoröhrchen 1 von oben geschoben. Die so gebildete Vorrichtung 10 zur Temperaturüberwachung kann nun kryogelagert werden, z. B. in einem Kryotank.

Gelangt die Probe 6 und damit auch die Indikatorsubstanz 7 irgendwann in einen Temperaturbereich oberhalb des Schmelzpunktes der Indikatorsubstanz 7, fließt die geschmolzene Indikatorsubstanz 7 in dem Wandungsvolumen 14 nach unten und sammelt sich in einem unteren Kappenbereich 16. Es ergibt sich das in Figur 1D gezeigte Bild. Ist die Probe 16 stets unter dem Gefrierpunkt der Indikatorsubstanz 6 gehalten worden, ergibt sich stattdessen der Zustand wie in Figur 1E gezeigt. Auf diese Weise ist leicht eine unstatthafte Erwärmung der Probe 6 erkennbar. Die Lage der Indikatorsubstanz innerhalb der Kappe 11 ist optisch durch Ansehen, aber auch mittels einer zweckmäßig ausgebildeten Messeinrichtung optoelektrisch und automatisiert detektierbar. Ist die Indikatorsubstanz 7 gefärbt, erleichtert dies die Lagebestimmung. Die Lagebestimmung der Indikatorsubstanz kann sehr leicht auch in den Kühltanks bei der Lagertemperatur erfolgen. Ein weiterer Vorteil der Vorrichtung 10 ist die Wiederverwendbarkeit der Kappen 11 und die Verwendung von als Indikatorsubstanz 7 verwendeten Markerflüssigkeiten mit einem frei wählbaren Gefrierpunkt. Für Lebendablagen empfiehlt sich eine Schmelztemperatur um -80 °C, da hier eine deutliche Rekristallisation des Eises in den Zellen und um diese herum auftritt, die zu einer Qualitätsminderung der Kryoprobe führt. Für biologische Flüssigkeiten und Lagerung von genetischem Material, das bei -80 °C gelagert wird, ist ein Schmelzpunkt um -30 °C zu empfehlen.

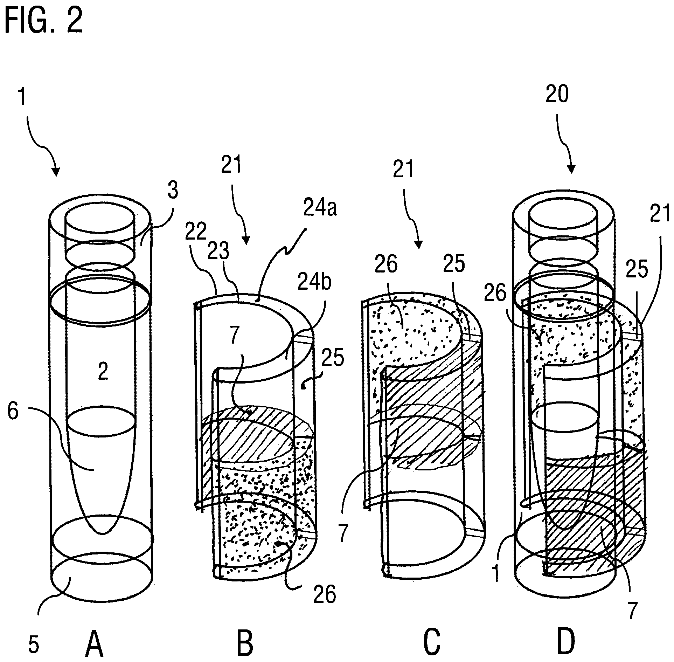

Figur 2 zeigt Ansichten einer abgewandelten Zwei-Phasen-Variante in Form eines aufsteckbaren Teils 21 aus transparentem Material, gezeigt in Figur 2B, das wie in Figur 2D gezeigt auf ein Kryoröhrchen 1, wie in Figur 2A gezeigt, aufgesteckt werden kann.

Das Aufsteckteil 21 ist wiederum doppelwandig mit einer Innenwandung 23 und einer Außenwandung 22 zur Ausbildung eines Wandungsvolumens 24 ausgeführt. Das Wandungsvolumen 24 ist durch eine Trennwand 25 in zwei voneinander getrennte Teilvolumen 24a und 24b aufgeteilt. Das Aufsteckteil bildet somit zwei Kammern 24a, 24b aus. Die Kammer 24a ist mit einer ersten Indikatorsubstanz 7, die Kammer 24b mit einer zweiten Indikatorsubstanz 26 partiell gefüllt. Die Indikatorsubstanzen 7, 26 haben verschiedene Schmelzpunkte. Diese werden in einer ersten Lage, gezeigt in Figur 1B, unter ihre Gefrierpunkte gebracht und erstarren. Das um 180° gedrehte Aufsteckteil 21 wird dann auf das gefrorene Kryoröhrchen 1 geschoben. Die Vorrichtung aus Kryoröhrchen 1 und aufgeschobenem Aufsteckteil 21 ist mit dem Bezugszeichen 20 bezeichnet. Das Aufsteckteil 21 ist an die Abmessungen des Kryoröhrchens 1 angepasst, so dass es auf eine Mantelfläche des Kryoröhrchens aufgeschoben werden kann und diese umgreift.

Wurde als erste Indikatorsubstanz 7 eine Flüssigkeit mit einem Gefrierpunkt bei -80 °C und als zweite Indikatorsubstanz 26 eine Flüssigkeit mit einem Gefrierpunkt bei -60 °C ausgewählt und wurde das Kryoröhrchen 1 zusammen mit dem Aufsteckteil 21 im Laufe seiner Lagerung bei einer der Entnahmen und erneuten Einlagerungen oder im Tank auf eine Temperatur oberhalb -80 °C ,jedoch unterhalb -60 °C gebracht, dann ergibt sich das in Figur 2D dargestellte Bild. Die Indikatorsubstanz 26 war zeitweise geschmolzen und ist in den unteren Bereich des Wandungsvolumens 24b geflossen, während die Indikatorsubstanz 7 sich noch im oberen Bereich des Wandungsvolumens 24a befindet. Auf diese Weise kann die Änderung der Lagertemperatur nunmehr eingegrenzt werden. Wäre die Vorrichtung 20 zumindest zweitweise über -60 °C erwärmt worden, befänden sich beide Indikatorsubstanzen 7, 26 im unteren Volumen des Aufsteckteils (nicht dargestellt). Ist die Probe korrekt gelagert worden, zeigt das Aufsteckteil 21 das in Figur 1C dargestellte Bild.

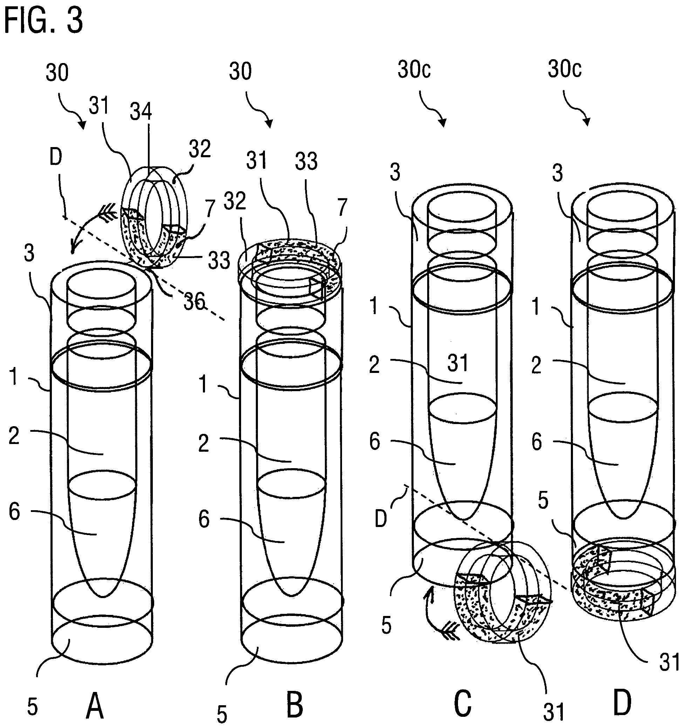

Figur 3 zeigt zwei Varianten eines partiell flüssigkeitsgefüllten doppelwandigen transparenten Ringkörpers 31, der ein Innenvolumen 34 zur Aufnahme einer Indikatorsubstanz 7 ausbildet und der verschwenkbar an einem Kryoröhrchen 1 befestigt ist. Bei der in den Figuren 3A und 3B gezeigten Variante der Vorrichtung 30 ist der Ringkörper 31 am Deckel 3 des Kryoröhrchens 1 verschwenkbar befestigt. Bei der in den Figuren 3C und 3D gezeigten Variante der Vorrichtung 30c ist der Ringkörper 31 am Boden 5 des Kryoröhrchens 1 verschwenkbar befestigt. Die Schwenkachse D verläuft dabei senkrecht zu einer Längsachse des Kryoröhrchens 1. Der Ringkörper kann in eine Vertikalstellung, wie in den Figuren 1A und 1C dargestellt, und in eine Horizontalstellung, wie in den Figuren 1B und 1D dargestellt, verschwenkt werden.

Eingefroren wird die Vorrichtung 30 bzw. 30c aus Kryoröhrchen 1 und Ringkörper 31 jeweils mit aufgestelltem Ring (Vertikalstellung), wie es in Figur 1A und Figur 1C gezeigt ist. Die Indikatorflüssigkeit 7 erstarrt in einem Teilvolumen 33 in der unteren Hälfte des Ringkörpers 31. Es wird betont, dass die Indikatorsubstanz nicht, wie gezeigt, das halbe innere Ringvolumen einnehmen muss, sondern darüber oder auch darunter liegen kann. Nach dem Erstarren der Indikatorflüssigkeit 7 wird der Ringkörper 31 an einem Haftteil 36 in die horizontale Position gedreht, wie in Figur 1B und Figur 1D gezeigt. Solange dieses Bild erhalten bleibt, ist die Vorrichtung 30, 30c bzw. die darin gelagerte Probe 6 nicht wärmer als der Schmelzpunkt der Indikatorflüssigkeit 7 erwärmt worden. Anderenfalls ist die Flüssigkeit breit geflossen und befindet sich nun auch zum Teil im Teilvolumen 32, was durch Anschauen, aber auch durch optische Messungen festgestellt werden kann.

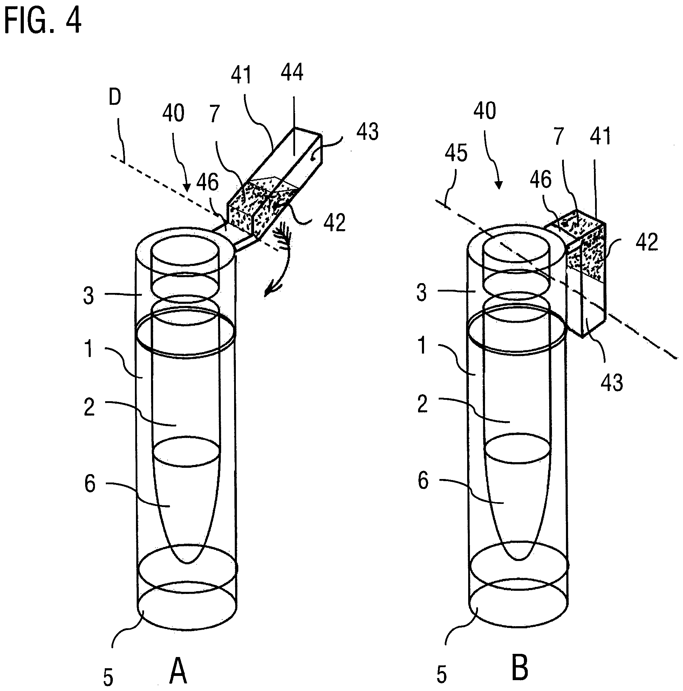

Figur 4 zeigt ein weiteres Ausführungsbeispiel, bei dem ein länglicher Behälter 41, dessen Innenvolumen 44 zum Teil mit der Indikatorsubstanz 7 gefüllt ist, an einem Kryoröhrchen 1 um die Drehachse D verschwenkbar befestigt ist. Die Indikatorsubstanz 7 wird bei schräger oder auch senkrechter Position des Behälters 41 eingefroren. Anschließend wird der Behälter 41 mit der gefrorenen Indikatorsubstanz 7, wie in Figur 4B gezeigt, nach unten gebogen. Hierzu ist der Behälter über ein Biegeteil 46 am Kryoröhrchen 1 befestigt. Solange die Indikatorsubstanz 7 in dem oberen Teilvolumen 42 gefroren verbleibt, ist die Schmelztemperatur nicht überschritten worden. Wenn die Vorrichtung 40 somit in dem in Figur 4B gezeigten Zustand nach einer Kryolagerung vorgefunden wird, kann daraus geschlossen werden, dass die Schmelztemperatur der Indikatorsubstanz nicht überschritten wurde. Diese Vorrichtung 40 eignet sich besonders gut für eine optische Detektion. So kann mit einer Messeinrichtung (nicht dargestellt), deren Messstrahlengang 45 (gestrichelte Linie) auf das untere Teilvolumen 43 des transparenten Behälters 41 gerichtet ist, überprüft werden, ob die Indikatorsubstanz 7 aufgrund eines Schmelzvorgangs flüssig wurde und dadurch in das untere Teilvolumen 43 geflossen ist. In diesem Fall wird der Messstrahl 45 von der Indikatorsubstanz absorbiert, was durch eine Unterbrechung des Messstrahls 45 detektiert werden kann.

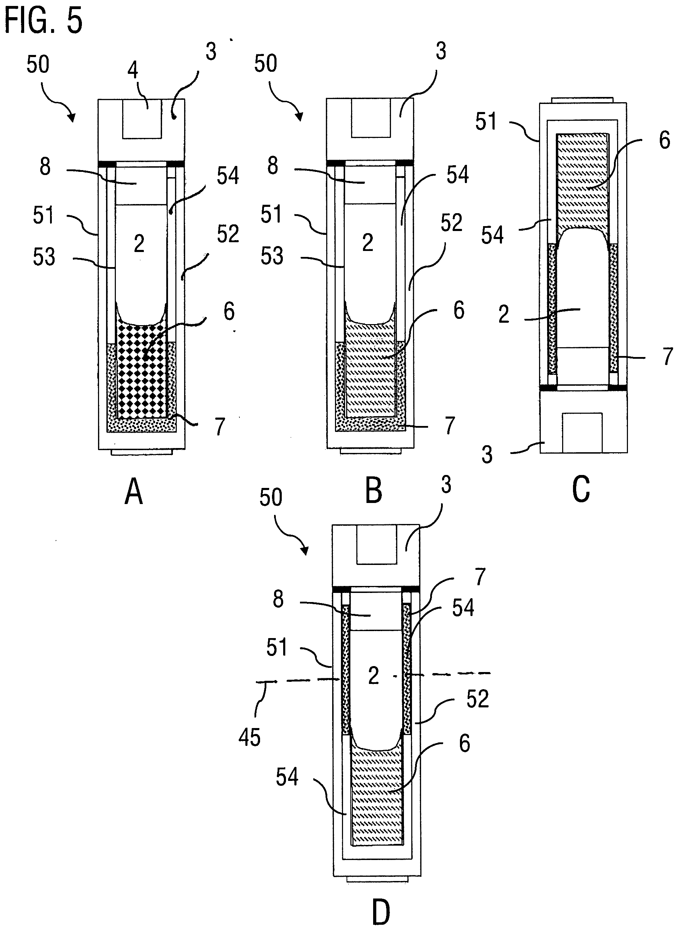

Figur 5 zeigt schematische Schnittansichten eines weiteren Ausführungsbeispiels einer Vorrichtung 50 zur Temperaturüberwachung einer kryokonservierten biologischen Probe.

Bei dem Ausführungsbeispiel ist die Kammer 54 zur Aufnahme der Indikatorsubstanz 7 in das Kryoröhrchen 51 integriert. Das Kryoröhrchen 51 hat wiederum ein Aufnahmevolumen (Aufnahmezylinder) 2, in das die Bioprobe 6 gegeben wird, sowie einen Deckel 3. Der Deckel hat einen Schaft 8, der in das Aufnahmevolumen 2 eingreift. Die Wandung des Aufnahmezylinders 2 ist doppelwandig ausgeführt, aufweisend eine Außenwandung 52 und eine Innenwandung 53, die ein Wandungsvolumen 54 ausbildet, in dem sich die Indikatorsubstanz 7 befindet. Die Vorrichtung 50 mit der Probe 6 wird nun folgendermaßen eingefroren:

Es erfolgt ein Einfrieren auf eine Temperatur unterhalb des Gefrierpunktes der Bioprobe 6 (in der Regel -20 °C) in der Position des Kryoröhrchens 51, wie in Figur 5A gezeigt. Es ergibt sich der Zustand, wie in Figur 5B gezeigt. Die nun gefrorene Bioprobe 6 mit der noch flüssigen Indikatorsubstanz 7 wird aus der Position in Figur 5B durch 180°-Drehung in die Position wie in Figur 5C gezeigt versetzt und weiter unter den Gefrierpunkt der Indikatorsubstanz 7 gekühlt. Ist die Schmelztemperatur der Indikatorsubstanz 7 z. B. mit -60 °C gewählt worden, dann kann die Probe 6 unterhalb dieser Temperatur und nach Erstarrung beider Flüssigkeiten wieder in die Ausgangsposition der Figur 5A gebracht werden, woraus sich der Zustand gemäß Figur 5D ergibt. Nun befindet sich die gefrorene Indikatorsubstanz 7 oben und die gefrorene Bioprobe 6 unten im Kryoröhrchen 51. Wird die Schmelztemperatur von -60°C überschritten, ist dies daran zu erkennen, dass sich beide Flüssigkeiten wieder wie in Figur 1A dargestellt im unteren Zylinderbereich befinden. Auch das kann über eine optische Transmissions- oder Streulichtmessung etc. detektiert werden, was anhand des gestrichelten Strahlengangs 45 in Figur 5D illustriert ist. Für den manuellen Betrieb ist eine Färbung der Indikatorsubstanz 7 zweckmäßig.

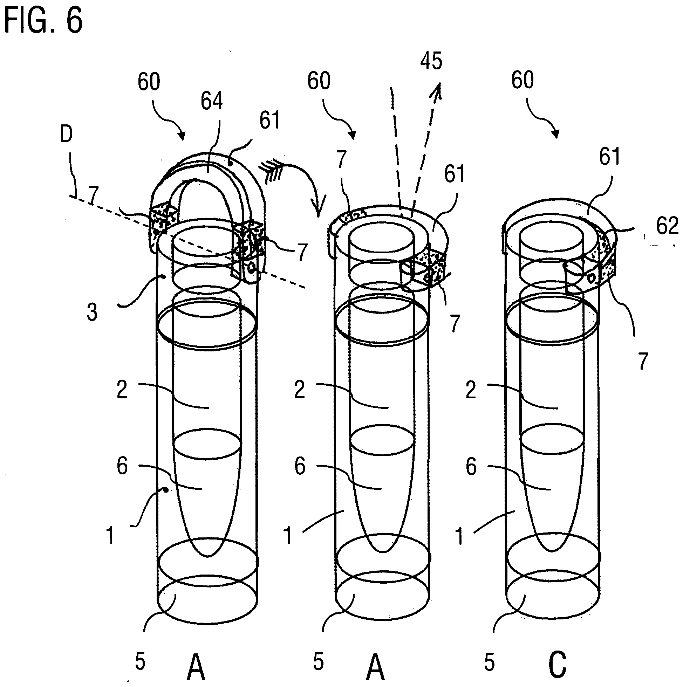

Die Ansichten der Figur 6 zeigen schematische Ansichten einer weiteren Vorrichtung 60 zur Temperaturüberwachung einer kryokonservierten biologischen Probe. Eine Besonderheit dieser Ausführungsvariante liegt darin, dass der Behälter, der partiell mit einer Indikatorsubstanz 7 gefüllt ist, als halbringförmiger Hohlkörper 61 ausgeführt ist. Der Halbringkörper 61 ist an seinen beiden Enden verschwenkbar am Deckel 3 eines Kryoröhrchens 1 befestigt, und zwar um eine Drehachse D, die senkrecht zu einer Längsachse des Kryoröhrchens 1 verläuft. In der Position der Figur 6A, in der der Halbringkörper 61 in eine Vertikalstellung verschwenkt ist, wird die Vorrichtung 60 bis auf die Lagertemperatur eingefroren. Die Indikatorsubstanz 7 fließt noch im flüssigen Aggregatszustand aufgrund der Schwerkraft an die beiden tiefsten Stellen im aufgerichteten Halbringkörper 61 und befindet sich somit rechts und links direkt über der Drehachse D. Dort friert die Indikatorsubstanz 7 ein. Im tiefgefrorenen Zustand wird der Halbringkörper 61 dann in eine horizontale Stellung gebracht, wie in Figur 6B dargestellt.

An diesem Halbringkörper 61 kann sehr einfach eine optische Messung von oben vorgenommen werden, die zeigt, ob sich die Indikatorsubstanz 7 noch in der ursprünglichen Position befindet oder, wie in Figur 6C gezeigt, im Ringboden 62 breit gelaufen ist. In diesem Fall ist der Schmelzpunkt der Indikatorsubstanz 7 zu irgendeinem Zwischenzeitpunkt überschritten worden. Eine Planseite des Halbringkörpers 61 kann auch verspiegelt sein, so dass der optische Messstrahl 45 reflektiert wird, wenn die Indikatorsubstanz nicht breit gelaufen ist.

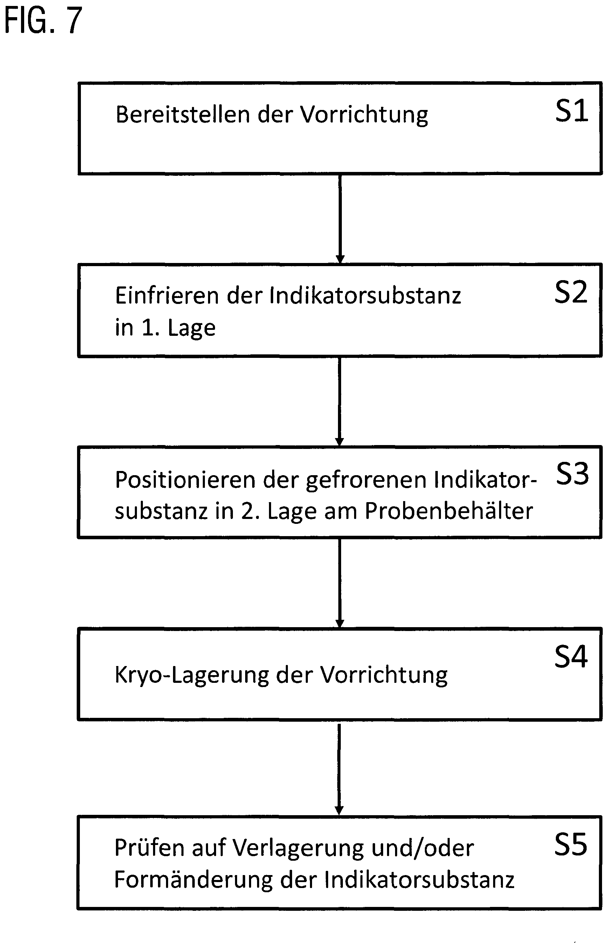

Figur 7 illustriert anhand eines Ablaufdiagramms ein Verfahren zur Temperaturüberwachung einer kryokonservierten biologischen Probe. In Schritt S1 wird eine Vorrichtung zur Temperaturüberwachung bereitgestellt, beispielsweise eine der Vorrichtungen 10, 20, 30, 30c, 40, 50 oder 60. Hierbei ist je nach Temperaturgrenzwert, der bei der Kryolagerung überwacht werden soll, eine geeignete Flüssigkeit oder ein Flüssigkeitsgemisch als Indikatorsubstanz 7 auszuwählen.

Über die Auswahl geeigneter Flüssigkeiten und das Mischungsverhältnis von Flüssigkeiten kann deren Schmelzpunkt auf einen gewünschten Wert in einem Bereich von -20 °C bis - 140 °C festgelegt werden.

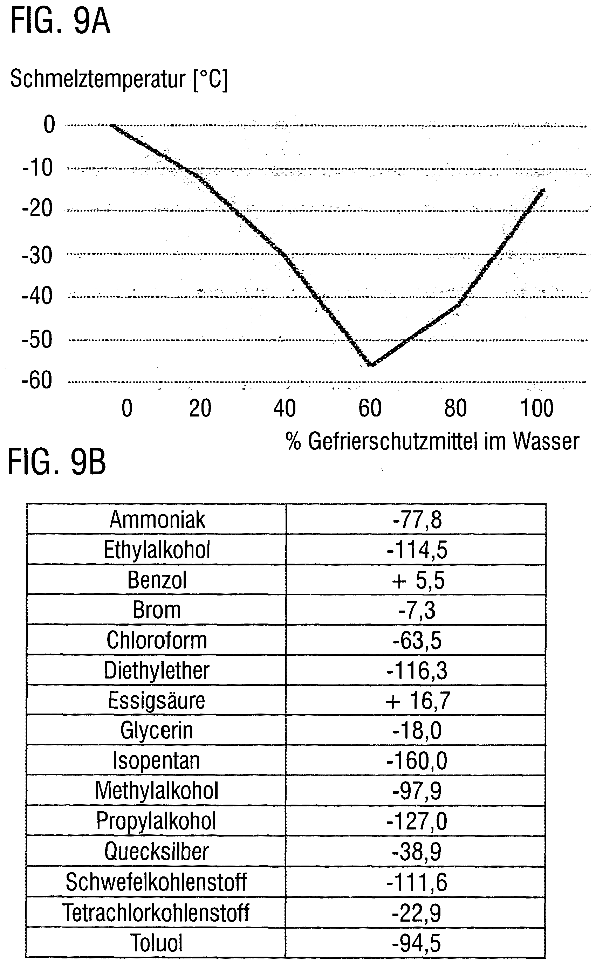

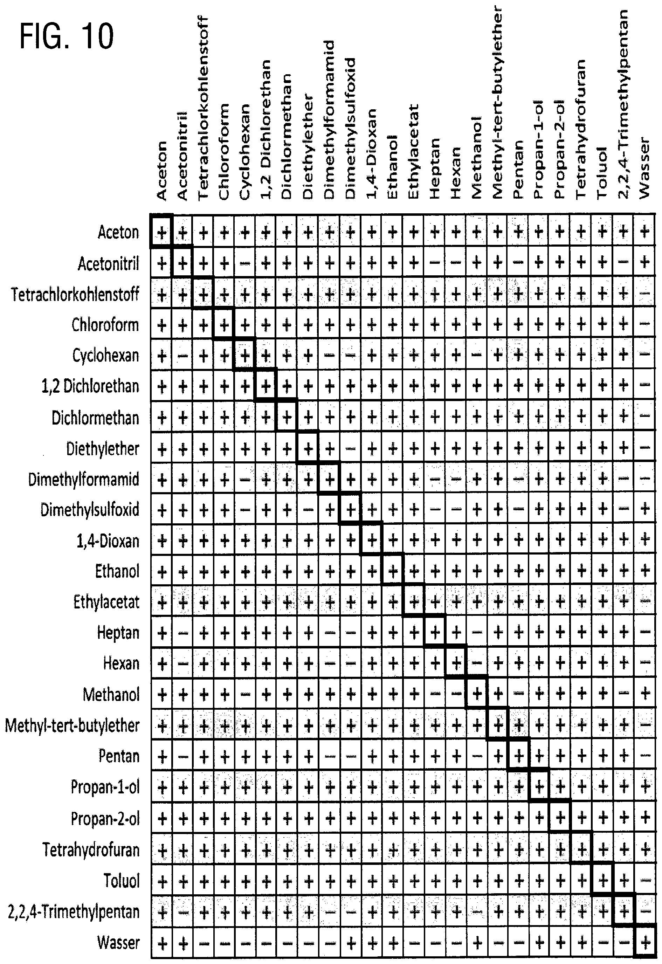

Beispielhaft ist in Figur 8A der Verlauf des Schmelzpunktes als Funktion des Mischungsverhältnisses aus einem Alkohol und Wasser angegeben, mit dem bei moderater Viskositätserhöhung mit abfallender Temperatur ein Temperaturbereich zwischen 0°C und -118 °C abgedeckt werden kann. Soll z. B. ein Temperaturgrenzwert von -118 °C überwacht werden, kann der Ethanol-Anteil auf 93,5 % festgelegt werden. Schmelzpunkte bis zu einem Wert von knapp unter -60 °C können auch durch Zumischung von Kaliumhydroxid (KOH) zu Wasser eingestellt werden, was in Figur 8B anhand eines Schmelzdiagramms gezeigt ist. Auch eine Mischung aus Waser und Gefrierschutzmittel kann als Indikatorsubstanz verwendet werden, was durch das Schmelzdiagramm der Figur 9A illustriert ist. Die Tabelle der Figur 9B führt Gefrierpunkte/Schmelzpunkte weiterer reiner Flüssigkeiten auf, die alleine oder als Mischung mit einer anderen Flüssigkeit als Indikatorsubstanz verwendet werden können. Weitere als Indikatorsubstanz geeignete Flüssigkeitsgemische sind Chloroform-Zyklohexan-Gemische oder andere mischbare Flüssigkeiten, die z. B. aus der Mischbarkeitsmatrix von Lösemitteln der Figur 10 entnommen werden können.

) Vornehmlich werden Flüssigkeiten und Plastikmaterialien mit guter Benetzbarkeit und niedriger Viskosität bei niedrigen Temperaturen ausgewählt, um die Lageveränderung möglichst umfangreich und die Zusatzkompartimente klein zu gestalten.

Falls mehrere Temperaturgrenzwerte bei der Kryolagerung überwacht werden sollen bzw. falls die erreichten Temperaturintervalle, in die die Probe gelangt ist, genauer eingegrenzt werden sollen, können entsprechend mehrere verschiedene Indikatorsubstanzen mit verschiedenen Schmelzpunkten verwendet werden, die dann in verschiedenen Kammern am Probenbehälter angebracht werden.

In Schritt S2 wird dann die Indikatorsubstanz in der Kammer eingefroren, wobei die Kammer während des Einfrierens der Indikatorsubstanz in eine erste Lage gebracht wird. Bei verschiedenen Indikatorsubstanzen und mehreren Kammern werden diese analog jeweils in die erste Lage gebracht und eingefroren.

Danach wird in Schritt S3 die mindestens eine Kammer mit der gefrorenen Indikatorsubstanz in eine zweite Lage gebracht und, falls die Kammer noch nicht am Probenbehälter angeordnet ist, an diesem angeordnet. Die zweite Lage verändert die räumliche Lage der gefrorenen Indikatorsubstanz zumindest so weit, dass ein Schmelzen nach der Lageveränderung zu einer sichtbaren Verlagerung der Flüssigkeit oder ihrer Begrenzungsgeometrie in der Kammer führt.

In diesem Zustand kann die Vorrichtung mit einer Kryoprobe im Aufnahmeraum des Probenbehälters bei einer Lagertemperatur unterhalb der Schmelztemperatur gelagert werden (Schritt S4).

Nachfolgend kann mittels der Indikatorsubstanz zu einem beliebigen Zeitpunkt während des Lagervorgangs überprüft werden, ob eine unerwünschte, wenn auch nur zeitweise Erwärmung der Kryoprobe stattgefunden hat. Hierzu wird geprüft, ob eine durch einen Schmelzvorgang verursachte zumindest teilweise Verlagerung und/oder Formänderung der Indikatorsubstanz(en) stattgefunden hat. Ist dies der Fall, kann auf ein Überschreiten der zu überwachenden Grenztemperatur(en) geschlossen werden.

Obwohl die Erfindung unter Bezugnahme auf bestimmte Ausführungsbeispiele beschrieben worden ist, ist es für einen Fachmann ersichtlich, dass verschiedene Änderungen ausgeführt werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen.

### Bezugszeichenliste

- 1: Probenbehälter, z. B. Kryoröhrchen
- 2: Aufnahmevolumen
- 3: Deckel
- 4: Eingriff
- 5: Boden
- 6: Bioprobe, z. B. Zellsuspension
- 7: Indikatorsubstanz
- 8: Schaft
- 10: Vorrichtung zur Temperaturüberwachung
- 11: Kappe
- 12: Außenwandung
- 13: Innenwandung
- 14: Wandungsvolumen
- 15: Kappenspitze
- 16: Unterer Kappenbereich
- 20: Vorrichtung zur Temperaturüberwachung
- 21: Doppelwandiges Aufsteckteil
- 22: Außenwandung
- 23: Innenwandung
- 24: Wandungsvolumen
- 24a: Teilvolumen
- 24b: Teilvolumen
- 25: Trennwand
- 26: Zweite Indikatorsubstanz
- 30: Vorrichtung zur Temperaturüberwachung
- 30c: Vorrichtung zur Temperaturüberwachung
- 31: Ringkörper
- 32: Erstes Teilvolumen
- 33: Zweites Teilvolumen
- 34: Innenvolumen
- 36: Haftteil
- 40: Vorrichtung zur Temperaturüberwachung
- 41: Behälter
- 42: Erstes Teilvolumen
- 43: Zweites Teilvolumen
- 44: Innenvolumen
- 45: Messstrahl
- 46: Biegeteil
- 50: Vorrichtung zur Temperaturüberwachung
- 51: Behälter, z. B. Kryoröhrchen
- 52: Außenwandung
- 53: Innenwandung
- 54: Wandungsvolumen
- 60: Vorrichtung zur Temperaturüberwachung
- 61: Halbringkörper
- 62: Halbringboden
- 63: Drehachse
- 64: Innenvolumen
- D: Drehachse

## Patentansprüche

1. Vorrichtung (10; 20; 30; 30C; 40; 50; 60) zur Temperaturüberwachung einer kryokonservierten biologischen Probe (6), umfassend
a) einen Probenbehälter (1; 51) mit einem Aufnahmeraum (2) zur Aufnahme einer biologischen Probe (6); und
b) mindestens eine Kammer, deren Innenraum mit dem Aufnahmeraum (2) nicht fluidisch verbunden ist und lediglich zum Teil mit einer Indikatorsubstanz (7) gefüllt ist, deren Schmelztemperatur in einem Bereich von -20 °C bis -140 °C liegt,
**dadurch gekennzeichnet,**
Variante i):
dass die mindestens eine Kammer durch einen Behälter (31; 41; 61) mit einem (34; 44; 64) oder mehreren Hohlräumen gebildet wird, der verschwenkbar am Probenbehälter (1) befestigt ist;
oder Variante ii):
dass die mindestens eine Kammer durch ein doppelwandiges Aufsteckteil (11; 21) gebildet ist, das lösbar am Probenbehälter befestigbar ist oder am Probenbehälter aufgeklebt sein kann;
oder Variante iii):
dass der Aufnahmeraum des Probenbehälters (51) zur Ausbildung der mindestens einen Kammer doppelwandig mit einer Innenwandung (53) und einer Außenwandung (52) ausgeführt ist, wobei ein Zwischenraum (54) zwischen der Innenwandung (53) und der Außenwandung (54) zum Teil mit der Indikatorsubstanz (7) gefüllt ist.

2. Vorrichtung nach Anspruch 1, **gekennzeichnet durch** eine Mehrzahl von Kammern, die jeweils lediglich zum Teil mit einer Indikatorsubstanz (6; 26), deren Schmelztemperatur in einem Bereich von -20 °C bis -140 °C liegt, gefüllt sind, wobei die Indikatorsubstanzen (6; 26) in den Kammern unterschiedliche Schmelztemperaturen aufweisen.

3. Vorrichtung nach Anspruch 1 oder 2, **dadurch gekennzeichnet, dass** eine Kammerwandung an mindestens einer Stelle transparent oder semi-transparent ist.

4. Vorrichtung nach einem der vorhergehenden Ansprüche, **gekennzeichnet durch** eine Messeinrichtung, die ausgebildet ist, eine Lage der Indikatorsubstanz (6) in der mindestens einen Kammer zu erfassen.

5. Vorrichtung nach einem der vorhergehenden Ansprüche, **dadurch gekennzeichnet, dass** die Indikatorsubstanz einen Indikatorzusatz enthält, der eine Detektierbarkeit einer physikalischen Eigenschaft der Indikatorsubstanz erhöht, wobei der Indikatorzusatz beispielsweise ein Farbstoff ist.

6. Vorrichtung nach einem der vorhergehenden Ansprüche gemäß Variante i), **dadurch gekennzeichnet, dass** der Behälter (31; 41; 61) an einem Längsende des Probenbehälters (1) verschwenkbar befestigt ist.

7. Vorrichtung nach einem der vorhergehenden Ansprüche gemäß Variante i), **dadurch gekennzeichnet, dass** der Behälter (41) durch ein verbiegbares Teil (46) verschwenkbar am Probenbehälter (1) befestigt ist.

8. Vorrichtung nach einem der vorhergehenden Ansprüche gemäß Variante i), **dadurch gekennzeichnet, dass** der Behälter (31; 41; 61) um eine Drehachse (D), die senkrecht zu einer Längsachse des Probenbehälters (1) ist, verschwenkbar am Probenbehälters (1) befestigt ist.

9. Vorrichtung nach einem der vorhergehenden Ansprüche gemäß Variante i), **dadurch gekennzeichnet, dass** der Behälter (31; 61)
a) halbringförmig oder ringförmig ausgeführt ist; und
b) in eine erste Schwenkstellung, in der er koaxial zur einer Längsachse des Probenbehälters angeordnet ist, und in eine um mindestens 45°, vorzugsweise um 90°, gegenüber der ersten Schwenkstellung gedrehte zweite Schwenkstellung bringbar ist.

10. Vorrichtung nach einem der vorhergehenden Ansprüche gemäß Variante i), **dadurch gekennzeichnet,**
a) **dass** der Behälter (41) ein länglicher Hohlkörper ist, der an einem Längsende des Probenbehälters (1) mittelbar oder unmittelbar am Probenbehälter (1) verschwenkbar befestigt ist; und/oder
b) **dass** der Behälter (41) in eine erste Schwenkstellung bringbar ist, in der eine Längsachse des Behälters parallel zu einer Längsachse des Probenbehälters verläuft, und in eine zweite Schwenkstellung bringbar ist, die im Vergleich zur ersten Schwenkstellung um mindestens 45° gedreht ist.

11. Vorrichtung (10) nach einem der Ansprüche 1 bis 5 gemäß Variante ii), **dadurch gekennzeichnet, dass** das doppelwandige Aufsteckteil (11) eine doppelwandige Kappe ist, die an einem Längsende des Probenbehälters (1) auf diesen aufsteckbar ist.

12. Vorrichtung nach einem der Ansprüche 1 bis 10 gemäß Variante i), **dadurch gekennzeichnet, dass** der Probenbehälter (1) einen Deckel (3) zum Verschließen des Aufnahmeraums (2) aufweist und dass der Behälter (31; 41; 61) am Deckel (3) verschwenkbar befestigt ist.

13. Vorrichtung nach einem der vorhergehenden Ansprüche, **dadurch gekennzeichnet, dass** der Probenbehälter (1; 51) ein Kryoröhrchen ist.

14. Vorrichtung nach 13 gemäß Variante ii), **dadurch gekennzeichnet, dass** das doppelwandige Aufsteckteil (21) auf eine äußere Mantelfläche des Kryoröhrchens (1) aufsteckbar, aufklebbar oder aufschiebbar ist und diese im aufgesteckten Zustand dabei zumindest teilweise umgreift.

15. Verfahren zur Temperaturüberwachung von kryokonservierten Proben, umfassend die Schritte:
a) Bereitstellen einer Vorrichtung zur Temperaturüberwachung nach einem der vorhergehenden Ansprüche (S1);
b) Einfrieren der Indikatorsubstanz(en), wobei die mindestens eine Kammer
- während des Einfrierens der Indikatorsubstanz(en) in eine erste Lage gebracht wird (S2) und
- danach in eine zweite Lage gebracht wird, in der ein Schmelzen der Indikatorsubstanz(en) durch den Einfluss der Schwerkraft zu einer zumindest teilweisen Verlagerung und/oder Formänderung der Indikatorsubstanz(en) in der mindestens einen Kammer führt (S3).

16. Verfahren nach Anspruch 15, **dadurch gekennzeichnet, dass** eine Substanz als Indikatorsubstanz ausgewählt wird, deren Schmelztemperatur oder deren Schwellentemperatur, bei der die Viskosität der geschmolzenen Indikatorsubstanz einen bestimmten Zielwert unterschreitet, einer vorbestimmten Grenztemperatur, deren Überschreiten überwacht werden soll, entspricht.

17. Verfahren nach Anspruch 15 oder 16, **gekennzeichnet durch**
a) das Lagern der Vorrichtung mit einer kryokonservierten Probe in dem Probenbehälter, wobei die mindestens eine Kammer in der zweiten Lage am Probenbehälter angeordnet ist (S4); und
b) das Feststellen, ob eine durch ein zeitweises Überschreiten der Schmelztemperatur der Indikatorsubstanz erfolgte zumindest teilweise Verlagerung und/oder Formänderung der Indikatorsubstanz(en) stattgefunden hat (S5).

18. Vorrichtung oder Verfahren nach einem der vorhergehenden Ansprüche, **dadurch gekennzeichnet, dass** die Indikatorsubstanz mindestens einen Alkohol, welcher aus der Gruppe, die Octan-1-ol, Nonan-1-ol, Propan-1,2-diol, Propan-1,3-diol, Butan-1,2-diol, Butan-1,3-diol, Butan-2-ol, Pentan-1,5-diol, Pentan-1-ol, Cyclopentanol, Benzylalkohol umfasst, ausgewählt ist, sowie optional mindestens einen Farbstoff umfasst.

19. Vorrichtung oder Verfahren nach Anspruch 18, **dadurch gekennzeichnet, dass** der Farbstoff aus der Gruppe ausgewählt ist, welche Triphenylmethanfarbstoffe, Rhodaminfarbstoffe, insbesondere Xanthene, Azofarbstoffe sowie Phenazin- und Phenothiazinfarbstoffe umfasst.

20. Vorrichtung oder Verfahren nach Anspruch 18 oder 19, **dadurch gekennzeichnet, dass** die Indikatorsubstanz mindestens zwei Alkoholkomponenten, welche aus der Gruppe, die Octan-1-ol, Nonan-1-ol, Propan-1,2-diol, Propan-1,3-diol, Butan-1,2-diol, Butan-1,3-diol, Butan-2-ol, Pentan-1,5-diol, Pentan-1-ol, Cyclopentanol, Benzylalkohol umfasst, ausgewählt sind, umfasst und/oder die Indikatorsubstanz mindestens einen Farbstoff umfasst, der aus der Gruppe ausgewählt ist, welche Oil Red, Methylrot, Brillantgrün, Rhodamin B, Neutralrot, Methylenblau oder andere Farbstoffe, die zur Anfärbung von Zellen in der Zytologie verwendet werden, umfasst.

## Claims

1. Device (10; 20; 30; 30C; 40; 50; 60) for temperature monitoring of a cryopreserved biological sample (6), comprising
a) a sample container (1; 51) with a receiving space (2) for receiving a biological sample (6); and
b) at least one chamber, the inner space of which is not fluidically connected to the receiving space (2) and is only partially filled with an indicator substance (7), the melting temperature of which lies in a range from -20°C to -140°C
**characterized in**
variant i):
that the at least one chamber is formed by a container (31; 41; 61) with one (34; 44; 64) or more cavities which is fastened pivotably to the sample container (1);
or variant ii):
that the at least one chamber is formed by a double-walled push-on part (11; 21), which is fastened detachably to the sample container or glued onto the sample container;
or variant iii):
that the receiving space of the sample container (51) for the formation of the at least one chamber is embodied to be double-walled with an inner wall (53) and an outer wall (52), wherein an intermediate space (54) between the inner wall (53) and the outer wall (54) is partially filled with the indicator substance (7).

2. Device according to Claim 1, **characterized by** a plurality of chambers which are filled in each case only partially with an indicator substance (6; 26), the melting temperature of which lies in a range from -20°C to -140°C, wherein the indicator substances (6; 26) in the chambers have different melting temperatures.

3. Device according to Claim 1 or 2, **characterized in that** a chamber wall at at least one point is transparent or semi-transparent.

4. Device according to any one of the preceding claims, **characterized by** a measuring apparatus which is configured to detect a position of the indicator substance (6) in the at least one chamber.

5. Device according to any one of the preceding claims, **characterized in that** the indicator substance comprises an indicator additive which increases detectability of a physical property of the indicator substance, wherein the indicator additive is, for example, a dye.

6. Device according to any one of the preceding claims in accordance with variant i), **characterized in that** the container (31; 41; 61) is fastened pivotably to a longitudinal end of the sample container (1).

7. Device according to any one of the preceding claims in accordance with variant i), **characterized in that** the container (41) is fastened pivotably to the sample container (1) by means of a bendable part (46).

8. Device according to any one of the preceding claims in accordance with variant i), **characterized in that** the container (31; 41; 61) is fastened pivotably to the sample container (1) about an axis of rotation (D) which is perpendicular to a longitudinal axis of the sample container (1).

9. Device according to any one of the preceding claims in accordance with variant i), **characterized in that** the container (31; 61)
a) is embodied to be semi-annular or annular; and
b) can be moved into a first pivot position, in which it is arranged coaxially with respect to a longitudinal axis of the sample container, and into a second pivot position which is rotated by at least 45°, preferably by 90°, with respect to the first pivot position.

10. Device according to any one of the preceding claims in accordance with variant i), **characterized in that**
a) the container (41) is an elongated hollow body which is fastened pivotably indirectly or directly to the sample container (1) at a longitudinal end of the sample container (1); and/or
b) the container (41) can be moved into a first pivot position, in which a longitudinal axis of the container runs parallel to a longitudinal axis of the sample container, and can be moved into a second pivot position, which is rotated by at least 45° in comparison with the first pivot position.

11. Device (10) according any one of claims 1 to 5 in accordance with variant ii), **characterized in that** the double-walled push-on part (11) is a double-walled cap which can be pushed onto the sample container (1) at a longitudinal end of the sample container (1).

12. Device according to any one of claims 1 to 10 in accordance with variant i), **characterized in that** the sample container (1) has a cover (3) for closing off the receiving space (2) and that the container (31; 41; 61) is fastened detachably or pivotably to the cover (3).

13. Device according to any one of the preceding claims, **characterized in that** the sample container (1; 51) is a cryogenic tube.

14. Device according to Claim 13 in accordance with variant ii), **characterized in that** the double-walled push-on part (21) can be pushed, glued or slid onto an outer shell surface of the cryogenic tube (1) and at least partially engages around it in the pushed-on state.

15. Method for temperature monitoring of cryopreserved samples, comprising the steps:
a) providing a device for temperature monitoring according to any one of the preceding claims (S1);
b) freezing the indicator substance(s), wherein the at least one chamber
- is moved into a first position during freezing of the indicator substance(s) (S2) and
- thereafter is moved into a second position in which a melting of the indicator substance(s) leads, as a result of the influence of gravity, to an at least partial displacement and/or change in shape of the indicator substance(s) in the at least one chamber (S3).

16. Method according to Claim 15, **characterized in that** a substance is selected as the indicator substance, the melting temperature of which or the threshold temperature of which, at which the viscosity of the melted indicator substance exceeds a determined setpoint value, corresponds to a predetermined threshold temperature, the exceeding of which should be monitored.

17. Method according to Claim 15 or 16, **characterized by**
a) storing of the device with a cryopreserved sample in the sample container, wherein the at least one chamber is arranged in the second position on the sample container (S4); and
b) ascertaining whether an at least partial displacement and/or change in shape of the indicator substance(s) performed by temporarily exceeding the melting temperature of the indicator substance has taken place (S5).

18. Device or method according to any one of the preceding claims, **characterized in that** the indicator substance comprises at least one alcohol which is selected from the group which comprises octan-1-ol, nonan-1-ol, propane-1,2-diol, propane-1,3-diol, butane-1,2-diol, butane-1,3-diol, butane-2-ol, pentane-1,5-diol, pentan-1-ol, cyclopentanol, benzyl alcohol as well as optionally at least one dye.

19. Device or method according to claim 18, **characterized in that** the dye is selected from the group which comprises triphenylmethane dyes, rhodamine dyes, in particular xanthene, azo dyes as well as phenazine and phenothiazine dyes.

20. Device or method according to claim 18 or 19, **characterized in that** the indicator substance comprises at least two alcohol components which are selected from the group which comprises octan-1-ol, nonan-1-ol, propane-1,2-diol, propane-1,3-diol, butane-1,2-diol, butane-1,3-diol, butane-2-ol, pentane-1,5-diol, pentan-1-ol, cyclopentanol, benzyl alcohol and/or the indicator substance comprises at least one dye which is selected from the group which comprises oil red, methyl red, brilliant green, rhodamine B, neutral red, methylene blue or other dyes which are used to colour cells in cytology.

## Revendications

1. Dispositif (10 ; 20 ; 30 ; 30C ; 40 ; 50 ; 60) pour la surveillance de la température d'un échantillon (6) biologique cryoconservé, comprenant
a) un récipient d'échantillons (1 ; 51) avec un espace de réception (2) pour recevoir un échantillon (6) biologique ; et
b) au moins un compartiment, dont l'espace intérieur n'est pas relié de manière fluidique à l'espace de réception (2) et est rempli seulement en partie avec une substance indicatrice (7), dont la température de fusion se situe dans une plage de -20 °C à -140 °C,
**caractérisé en ce**
variante i) :
que l'au moins un compartiment est formé par un récipient (31 ; 41 ; 61) avec un (34 ; 44 ; 64) ou plusieurs espaces creux, qui est fixé de manière à pouvoir pivoter sur le récipient d'échantillons (1) ;
ou variante ii) :
que l'au moins un compartiment est formé par une partie à emboîter (11 ; 21) à double paroi, qui peut être fixée de manière amovible sur le récipient d'échantillons ou peut être collée sur le récipient d'échantillons ;
ou variante iii) :
que l'espace de réception du récipient d'échantillons (51) est réalisé pour former l'au moins un compartiment avec une double paroi avec une paroi intérieure (53) et une paroi extérieure (52), dans lequel un espace intermédiaire (54) entre la paroi intérieure (53) et la paroi extérieure (54) est rempli en partie avec la substance indicatrice (7).

2. Dispositif selon la revendication 1, **caractérisé par** une multitude de compartiments, qui sont remplis respectivement seulement en partie avec une substance indicatrice (6 ; 26), dont la température de fusion se situe dans une plage de -20 °C à -140 °C, dans lequel les substances indicatrices (6 ; 26) présentent des températures de fusion différentes dans les compartiments.

3. Dispositif selon la revendication 1 ou 2, **caractérisé en ce qu'**une paroi de compartiment est transparente ou semi-transparente à au moins un emplacement.

4. Dispositif selon l'une quelconque des revendications précédentes, **caractérisé par** un système de mesure qui est réalisé pour détecter une position de la substance indicatrice (6) dans l'au moins un compartiment.

5. Dispositif selon l'une quelconque des revendications précédentes, **caractérisé en ce que** la substance indicatrice contient un additif indicateur, qui améliore une détectabilité d'une propriété physique de la substance indicatrice, dans lequel l'additif indicateur est par exemple un colorant.

6. Dispositif selon l'une quelconque des revendications précédentes selon la variante i), **caractérisé en ce que** le récipient (31 ; 41 ; 61) est fixé de manière à pouvoir pivoter sur une extrémité longitudinale du récipient d'échantillons (1).

7. Dispositif selon l'une quelconque des revendications précédentes selon la variante i), **caractérisé en ce que** le récipient (41) est fixé de manière à pouvoir pivoter sur le récipient d'échantillons (1) par une partie pouvant être cintrée (46).

8. Dispositif selon l'une quelconque des revendications précédentes selon la variante i), **caractérisé en ce que** le récipient (31 ; 41 ; 61) est fixé de manière à pouvoir pivoter sur le récipient d'échantillons (1) autour d'un axe de rotation (D), qui est perpendiculaire à un axe longitudinal du récipient d'échantillons (1).

9. Dispositif selon l'une quelconque des revendications précédentes selon la variante i), **caractérisé en ce que** le récipient (31 ; 61)
a) est réalisé en forme de demi-anneau ou en forme d'anneau ; et
b) peut être amené dans une première position de pivotement, dans laquelle il est disposé de manière coaxiale par rapport à un axe longitudinal du récipient d'échantillons, et dans une deuxième position de pivotement tournée d'au moins 45°, de préférence de 90° par rapport à la première position de pivotement.

10. Dispositif selon l'une quelconque des revendications précédentes selon la variante i), **caractérisé en ce**
a) **que** le récipient (41) est un corps creux longitudinal, qui est fixé de manière à pouvoir pivoter indirectement ou directement sur le récipient d'échantillons (1) sur une extrémité longitudinale du récipient d'échantillons (1) ; et/ou
b) **que** le récipient (41) peut être amené dans une première position de pivotement, dans laquelle un axe longitudinal du récipient s'étend parallèlement à un axe longitudinal du récipient d'échantillons, et peut être amené dans une deuxième position de pivotement, qui est tournée d'au moins 45° en comparaison avec la première position de pivotement.

11. Dispositif (10) selon l'une quelconque des revendications 1 à 5 selon la variante ii), **caractérisé en ce que** la partie à emboîter (11) à double paroi est un capuchon à double paroi, qui peut être emboîté sur le récipient d'échantillons (1) sur une extrémité longitudinale de celui-ci.

12. Dispositif selon l'une quelconque des revendications 1 à 10 selon la variante i), **caractérisé en ce que** le récipient d'échantillons (1) présente un couvercle (3) pour fermer l'espace de réception (2), et que le récipient (31 ; 41 ; 61) est fixé de manière à pouvoir pivoter sur le couvercle (3).

13. Dispositif selon l'une quelconque des revendications précédentes, **caractérisé en ce que** le récipient d'échantillons (1 ; 51) est un cryotube.

14. Dispositif selon la revendication 13 selon la variante ii), **caractérisé en ce que** la partie à emboîter (21) à double paroi peut être emboîtée, collée ou enfilée sur une surface enveloppante extérieure du cryotube (1) et entoure ce faisant au moins en partie celle-ci dans l'état emboîté.

15. Procédé pour la surveillance de la température d'échantillons cryoconservés, comprenant les étapes :
a) de fourniture d'un dispositif pour la surveillance de la température selon l'une quelconque des revendications précédentes (S1) ;
b) de surgélation de la/des substance(s) indicatrice(s), dans lequel l'au moins un compartiment
- est amené dans une première position au cours de la surgélation de la/des substance(s) indicatrice(s) (S2), et
- est amené ensuite dans une deuxième position, dans laquelle une fusion de la/des substance(s) indicatrice(s) conduit par l'influence de la force gravitationnelle à un déplacement et/ou un changement de forme au moins partiel de la/des substance(s) indicatrice(s) dans l'au moins un compartiment (S3).

16. Procédé selon la revendication 15, **caractérisé en ce qu'**est choisie en tant que substance indicatrice une substance, dont la température de fusion ou dont la température de seuil, à laquelle la viscosité de la substance indicatrice fondue reste inférieure à une valeur cible définie, correspond à une température limite prédéfinie, dont le dépassement doit être surveillé.

17. Procédé selon la revendication 15 ou 16, **caractérisé par**
a) le stockage du dispositif avec un échantillon cryoconservé dans le récipient d'échantillons, dans lequel l'au moins un compartiment est disposé dans la deuxième position sur le récipient d'échantillons (S4) ; et
b) le constat si un déplacement et/ou changement de forme au moins partiel de la/des substance(s) indicatrice(s) effectué par un dépassement temporaire de la température de fusion de la substance indicatrice a eu lieu (S5).

18. Dispositif ou procédé selon l'une quelconque des revendications précédentes, **caractérisé en ce que** la substance indicatrice comprend au moins un alcool, lequel est choisi parmi le groupe qui comprend l'octane-1-ol, le nonane-1-ol, le propane-1,2-diol, le propane-1,3-diol, le butane-1,2-diol, le butane-1,3-diol, le butane-2-ol, le pentane-1,5-diol, le pentane-1-ol, le cyclopentanol, l'alcool benzylique, et comprend également en option au moins un colorant.

19. Dispositif ou procédé selon la revendication 18, **caractérisé en ce que** le colorant est choisi parmi le groupe, lequel comprend des colorants de triphénylméthane, des colorants de rhodamine, en particulier des xanthènes, des colorants azoïques ainsi que des colorants phénazine et phénothiazine.

20. Dispositif ou procédé selon la revendication 18 ou 19, **caractérisé en ce que** la substance indicatrice comprend au moins deux composants d'alcool, lesquels sont choisis parmi le groupe qui comprend l'octane-1-ol, le nonane-1-ol, le propane-1,2-diol, le propane-1,3-diol, le butane-1,2-diol, le butane-1,3-diol, le butane-2-ol, le pentane-1,5-diol, le pentane-1-ol, le cyclopentanol, l'alcool benzylique, et/ou la substance indicatrice comprend au moins un colorant qui est choisi parmi le groupe, lequel comprend du Oil Red O, du rouge de méthyle, du vert brillant, de la rhodamine B, du rouge neutre, du bleu de méthyle ou d'autres colorants qui sont utilisés pour colorer des cellules en cytologie.
